# EUROPEAN PATENT APPLICATION

(11) **EP 4 556 366 A1**
(43) Date of publication of application: **21.05.2025**
(21) Application number: 23210387.9
(22) Date of filing: 16.11.2023
(51) Int. Cl.: B64C 29/00, B64D 27/30, B64D 45/00, B64C 5/02, B64C 11/44

(54) **A MULTIROTOR AIRCRAFT WITH ACTIVE FLUTTER REDUCTION SYSTEM**

(71) Applicant: AIRBUS HELICOPTERS DEUTSCHLAND GmbH, 86609 Donauwörth (DE)
(72) Inventor: DIETERICH, Oliver, 82237 WÖRTHSEE (DE)
(74) Representative: GPI Brevets

(57) **Abstract**

The invention relates to an electrically powered multirotor aircraft (100) that is adapted for vertical take-off and landing, comprising a fuselage (101a), at least one aircraft lifting surface (107a) that is connected to the fuselage (101a), at least one propeller (105a) that is connected to the at least one aircraft lifting surface (107a), a sensor unit (130), a flutter reduction unit, and a settings adjustment device. The sensor unit (130) is configured to generate sensor data that is indicative of flutter of the at least one aircraft lifting surface (107a). The flutter reduction unit is configured to receive the sensor data to generate flutter reduction signals. The settings adjustment device is configured to receive the flutter reduction signals and to adjust current settings of the at least one propeller (105a) based on the flutter reduction signals to reduce flutter of the at least one aircraft lifting surface (107a).

## Description

The invention is related to an electrically powered multirotor aircraft which is adapted for vertical take-off and landing and which comprises thrust producing units for producing thrust in operation and, more particularly, to an electrically powered multirotor aircraft with thrust producing units that comprise propellers for providing lift. The present technology further relates to a method of controlling the thrust producing units of the electrically powered multirotor aircraft.

Fixed-wing and rotary-wing aircraft may be subject to an aeroelasticity problem known as flutter. Flutter consists of the undesirable interaction of airframe structural modes and the associated unsteady aerodynamic forces of airframe aerodynamic surfaces. Typical flutter problems are wing flutter involving wing bending and torsion modes, tailplane flutter with lateral and vertical motion of the tail planes, and whirl flutter based on undesirable coupling of rotors or propellers with a supporting structure such as an elastic wing. As flutter problems relate to structural integrity and flight safety, it is desirable to structurally design the airframe for improved flutter characteristics.

Flutter suppression by active means is a well-known technology applied in the fixed-wing domain using aerodynamic control surfaces such as ailerons, flaps, horizontal and vertical tail planes to counteract unstable airframe motions. Active flutter suppression on aircrafts is applied on both civil and military planes to a large extent. Eli Livne gives a detailed overview in "Aircraft Active Flutter Suppression: State of the Art and Technology Maturation Needs", Journal of Aircraft Vol. 55, No.1, January-February 2018. Improvements for increasing structural dynamic stability to fixed-wing aircrafts are also described in documents WO 2008/127482 A3 and US 2008/0023588 A1.

For rotary-wing aircrafts, flutter stability is a very important topic in view of whirl flutter for tiltrotor vehicles. Active means to reduce flutter include the use of aerodynamic control surfaces or the use of cyclic control of the tiltrotor systems for stability. Nevertheless, the basic approach consists of a structural design that is robust enough to ensure adequate flutter stability. However, this basic approach typically results in a thick wing that supports nacelles with the tiltrotor systems. Due to the thick wing design, the wing has a high bending and torsional stiffness to mitigate the flutter phenomena.

Documents US 2010/0178167 A1 and WO 99/15401 A1 describe active control elements especially placed on rotor blades. However, due to the active control elements, the rotor blades are comparably stiff in torsion. Moreover, these approaches require active trailing edge flaps as special actuators. Similarly, document US 6 821 090 B1 describes an active control device requiring air jets as special actuators. Such special actuators introduce additional weight and complexity to the airframe. Still other examples of complex system and structure implementations involve blade control actuators as described in document US 2020/0391860 A1.

For conventional helicopters, flutter phenomena related to the main rotor system are often treated by modifying the rotor speed law in the flight domain. Other means leading to increased rotor blade flutter stability consist in modifying the chord wise blade balancing by adding mass close to the rotor blade leading edge or by stiffening the primary rotor control path either in the non-rotating or in the rotating frame.

Document US 2 397 132 A describes a vibration damper for a propeller blade having a natural period of vibration corresponding to a predetermined frequency of vibratory forces arising at a particular speed of rotation within the range of operating speeds of the propeller, comprising a pendulum freely pivotally mounted on the blade for angular movement in the plane of flexure of the blade, the pendulum being mounted adjacent to the tip of the blade and having an oscillation frequency at the particular propeller speed corresponding to the predetermined frequency of the vibratory forces.

However, the structural design optimizations mentioned above for improved flutter characteristics are typically linked to a significant weight increase that is either caused by structural stiffening of the aerodynamic surfaces or by tuning weights attached to the aerodynamic surfaces in order to beneficially modify the airframe mode shapes. Thus, solutions described by the above documents for flutter suppression typically feature significant weight penalties which might be unacceptable for electrically powered multirotor aircrafts that are adapted for vertical take-off and landing (hereinafter "eVTOL multirotor aircraft"). More specifically, the airframe structural weight of eVTOL multirotor aircrafts needs to be reduced as much as possible e.g., considering the weight constraints given by today's battery technology. Furthermore, the structural design optimizations mentioned above may lead to additional global airframe modes and potentially unfavorable interactions with existing wing and tailplane modes. All these aspects lead to designs with potentially low flutter stability boundaries.

Document EP 3 499 391 A1 describes a system for automatically generating aircraft models by modifying quantitative design variables based on joint analysis of aerodynamic, structural, and/or energy performance, while document US 9 751 614 A1 describes an aeroelastic wing shaping using distributed propulsion and a flight controller that independently controls thrust of the inboard and outboard propulsion devices to significantly change flight dynamics. However, neither of those two approaches is used to improve flutter stability.

Based on the limitations and drawbacks of the prior art, an object of the present invention is to provide an eVTOL multirotor aircraft that has increased flutter stability. The eVTOL multirotor aircraft should be lightweight. Further objectives relate to providing a method of controlling such a lightweight eVTOL multirotor aircraft for flutter reduction.

The objective is solved by an electrically powered multirotor aircraft that is adapted for vertical take-off and landing comprising the features of claim 1.

More specifically, an electrically powered multirotor aircraft that is adapted for vertical take-off and landing comprises a fuselage, at least one aircraft lifting surface, at least one propeller, a sensor unit, a flutter reduction unit, and a settings adjustment device. The at least one aircraft lifting surface is connected to the fuselage and adapted for providing lift at least during cruise flight of the electrically powered multirotor aircraft. The at least one propeller is connected to the at least one aircraft lifting surface and at least adapted for providing forward and/or lift thrust during cruise flight of the electrically powered multirotor aircraft. The sensor unit is configured to generate sensor data that is indicative of flutter of the at least one aircraft lifting surface. The flutter reduction unit is configured to receive the sensor data from the sensor unit and to generate, based on the sensor data, flutter reduction signals. The settings adjustment device is configured to receive the flutter reduction signals and to adjust current settings of the at least one propeller based on the flutter reduction signals to reduce flutter of the at least one aircraft lifting surface.

Advantageously, for the inventive electrically powered multirotor aircraft that is adapted for vertical take-off and landing, the stability increase is achieved by actively controlling and adjusting propeller thrust in order to mitigate adverse wing/tailplane motions by introducing stabilizing unsteady loads to the aerodynamic surfaces. Preferably, the propeller thrust is adjusted by controlling the propeller speed and/or the collective blade pitch of one or more propeller.

More specifically, the aeroelastic system of the electrically powered multirotor aircraft may include aeroelastic feedback loops involving both the structural dynamics of the airframe and the unsteady aerodynamic loads on the airframe. Depending on the level of impact of airframe structural dynamic motions on airframe aerodynamic loading and on the level of impact of airframe aerodynamic loading on airframe structural dynamic motions, instability may occur in case of high adverse feedback gains. That is, high aerodynamic loads due to given motions and vice versa, may potentially cause flutter instability.

If desired, the aeroelastic system may further feature input channels and output channels. The input channels may relate to the propeller rotational speed, and the output channels may relate to airframe motions. By way of example, a change of rotational speed of a lifting propeller may lead to a change of unsteady loads of the lifting propeller, and thus, these unsteady loads together with other unsteady aerodynamic loads on the airframe caused by motions of the aircraft may cause an impact on the structural dynamics of the airframe. The structural dynamics of the airframe would then reflect the impact as output motions, e.g., wing or tailplane motions.

Therefore, for eVTOL multirotor aircrafts comprising lifting propellers which are attached to the wing or the tail plane, active flutter reduction can be achieved by controlling the propeller thrust. Controlling the propeller thrust may be achieved, for example, by controlling the propeller speed (e.g., by varying the revolutions per minute of the propeller, hereinafter "RPM"). Electric motor drives used to drive the propellers are characterized by fast response times, making them suitable for fast control tasks.

Changes in propeller speed typically result in variations of propeller thrust. The variations of propeller thrust can be used for altering wing/tail plane bending loads and wing/tail-plane torsion loads. Thus, motions that depend on the attachment of the propulsion unit (e.g., the lifting propeller) to the wing or tail will be altered. By way of example, a propeller unit may include a lifting propeller that is mounted to a wing via a beam. Motions of the wing tip may be detected by sensors located at the wing tip. Based on the sensor data of motions of the wing tip, the lifting propeller may be controlled to adjust the propeller speed. As a result, the propeller speed variation introduces torsion moment increments to the wing-beam-propeller unit to achieve flutter reduction of the wing.

Illustratively, active control systems may feature three major components: a sensor system for providing feedback signals, a control system for calculating control signals based on the measurements, and an actuation system acting on the aeroelastic system. For the sensor system, various devices can be used for sensing wing or tailplane motions. By way of example, sensors may be accelerometers or rate sensors. Such sensors for collecting velocity or acceleration data may be located at the wing tip at leading edge and trailing edge. If desired, the sensor system may also include strain gauges. The strain gauges may be attached to the wing/tail plane structure at adequate positions, e.g., in the root or attachment area. The feedback loop of the control system may be formulated in the time domain for stabilization. Classical controller concepts for stability are e.g., proportional-integral-derivative (PID) controller concepts. Fixed pitch propellers may refer to rotor speed variation for stabilization, while variable pitch propellers, may use both, speed and blade pitch control, for stabilization. More specifically, both propeller speed (i.e., RPM) and collective blade pitch of one or more lifting propellers can be controlled to adjust the thrust of a variable pitch propeller, and thus can be used to reduce flutter and for stabilization.

Illustratively, an active flutter stabilization loop can be formed by four main components, which are the aeroelastic system, the motion sensors, the controller, and the unsteady loads of the lifting propeller. By way of example, the workflow of an active flutter stabilization loop may be as follows: the aeroelastic system generates motions during the flight. Motion sensors detect the motions and generates detection data. Based on this detection data, the control system generates control signals which are sent to the actuator unit, which in turn uses the control signals to operate the actuator unit to control the unsteady load of the lifting propeller. The variation of the unsteady load of the lifting propeller is then fed back to the aeroelastic system of the aircraft to achieve flutter reduction.

Using active control for increased flutter stability in eVTOL multirotor aircrafts is very desirable. For example, applying active control allows eVTOL multirotor aircrafts to be built with a more flexible airframe with related saving in weight as only stress requirements need to be fulfilled but no dynamics sizing needs to be considered on top.

Furthermore, active flutter suppression typically features a relatively low weight increase due to required sensors and controller (including wiring/harness). Typically, actuation systems are already available for flight control purposes. For flutter suppression, adequate bandwidth of the actuation systems needs to be ensured. In this context, it should be mentioned that unstable flutter modes - composed of fundamental bending and torsion modes - are often located at low frequencies e.g., below 10 Hz hereby easing the bandwidth requirements for flutter control. Thus, actuation bandwidth requirements for flutter stabilization might not differ too much from those for flight control elements asking for low modifications - if at all.

The architectures of eVTOL multirotor aircrafts might feature aerodynamic control surfaces, propeller blade pitch and propeller RPM as control devices. In case of existing aerodynamic control elements, classical active flutter designs as developed for fixed wing vehicles can be applied. In case of no dedicated aerodynamic control elements, unsteady propeller hub loads might be used if the propeller hub loads feature authority to modify aerodynamic surface motions significantly which is e.g., the case for beam-mounted lifting propellers attached to the wing structure. Unsteady hub loads can be generated either by modification of propeller speed or by modification of propeller blade pitch. Thus, active flutter suppression can be achieved by RPM control of lifting propellers e.g., in case of fixed pitch propellers or by blade pitch control without requiring additional aeroelastic control devices.

Preferably, the current settings of the at least one propeller may be adjusted to control thrust generation of the at least one propeller for flutter reduction.

In some embodiments, the settings adjustment device may comprise at least one electrical drive unit for driving the at least one propeller. Preferably, the electrical drive unit may adjust the current settings of the at least one propeller to control a rotational speed of the at least one propeller for flutter reduction.

In some embodiments, the settings adjustment device may comprise at least one actuator unit associated with the at least one propeller. Preferably, the at least one actuator unit may adjust the current settings of the at least one propeller to control a collective blade pitch of the at least one propeller for flutter reduction.

In some embodiments, the sensor unit may comprise at least one sensor that is mounted to the at least one aircraft lifting surface.

Preferably, the at least one sensor is configured to measure operating parameters of the at least one aircraft lifting surface.

Preferably, the operating parameters comprise at least one of a current velocity, acceleration, or strain of the at least one aircraft lifting surface.

In some embodiments, the electrically powered multirotor aircraft may further comprise at least one additional propeller. The at least one additional propeller may be connected to the at least one aircraft lifting surface and at least adapted for providing forward and/or lift thrust during cruise flight of the electrically powered multirotor aircraft.

Preferably, an additional settings adjustment device is provided. The additional settings adjustment device may be configured to receive the flutter reduction signals and to adjust current settings of the at least one additional propeller based on the flutter reduction signals to reduce flutter of the at least one aircraft lifting surface.

In some embodiments, the electrically powered multirotor aircraft may further comprise at least one beam that is attached to the at least one aircraft lifting surface. Preferably, the at least one propeller may be attached to the at least one aircraft lifting surface via the at least one beam.

In some embodiments, the at least one aircraft lifting surface is preferably one of a wing or a horizontal stabilizer.

In some embodiments, the at least one aircraft lifting surface may comprise at least one wing. Preferably, at least one additional aircraft lifting surface is provided, and the at least one additional aircraft lifting surface may comprise at least one horizontal stabilizer. Furthermore, the at least one wing may be connected to at least one propeller and the at least one horizontal stabilizer may be connected to at least one other propeller.

Moreover, a method of reducing flutter of at least one aircraft lifting surface of an electrically powered multirotor aircraft that is adapted for vertical take-off and landing is provided. The electrically powered multirotor aircraft comprises at least one propeller which is connected to the at least one aircraft lifting surface. The method comprises using a sensor unit to generate sensor data that is indicative of flutter of the at least one aircraft lifting surface, using a flutter reduction unit to receive the sensor data from the sensor unit and to generate, based on the sensor data, flutter reduction signals, and using a settings adjustment device to receive the flutter reduction signals and to adjust current settings of at least one propeller based on the flutter reduction signals to reduce flutter of the at least one aircraft lifting surface.

In some embodiments, using the settings adjustment device to adjust current settings of the at least one propeller based on the flutter reduction signals to reduce flutter of the at least one aircraft lifting surface may comprise using the settings adjustment device to adjust the current settings of the at least one propeller to control thrust generation of the at least one propeller for flutter reduction.

In some embodiments, using the settings adjustment device to adjust current settings of the at least one propeller based on the flutter reduction signals to reduce flutter of the at least one aircraft lifting surface may comprise using the settings adjustment device to adjust a rotational speed of the at least one propeller and/or a collective blade pitch of the at least one propeller.

In some embodiments, using the sensor unit to generate sensor data may comprise using the sensor unit to measure operating parameters of the at least one aircraft lifting surface.

Preferably, the operating parameters may comprise at least one of a current velocity, acceleration, or strain of the at least one aircraft lifting surface.

Advantageously, the inventive multirotor aircraft is not only designed for transportation of passengers, but is, in particular, suitable and adapted for being certified for operation within urban areas. Furthermore, the inventive multirotor aircraft is preferably capable of hovering and comprises a distributed propulsion system. Moreover, the inventive arrangement of the lift/thrust producing units enables a reduction of negative interactional effects between front and rear parts of the inventive multirotor aircraft significantly, and one or more thrust producing units on each lifting surface can be independently controlled to reduce the flutter of that lifting surface.

It should be noted that reference to rotors or rotor structures in the present description should likewise be understood as a reference to propellers and propeller structures, so that the inventive multirotor aircraft can likewise be implemented as a multipropeller and/or multipropeller and -rotor aircraft. Furthermore, the aircraft of the present invention is particularly suitable for use in the field of helicopters.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1A shows a perspective view of an illustrative eVTOL multirotor aircraft,
- Figure 1B shows, from a different angle, a perspective view of the illustrative eVTOL multirotor aircraft of Figure 1A,
- Figure 2A shows a schematic diagram of an illustrative active flutter reduction system of an eVTOL multirotor aircraft according to a first variant,
- Figure 2B shows a schematic diagram of an illustrative active flutter reduction system of an eVTOL multirotor aircraft according to a second variant,
- Figure 2C shows a schematic diagram of an illustrative active flutter reduction system of an eVTOL multirotor aircraft according to a third variant,
- Figure 3 shows a partial perspective view of an illustrative lifting propeller and an aircraft lifting surface,
- Figure 4A shows a schematic diagram of a destabilizing effect of same-directional aerodynamic forces of a pitch angle change and wing heave motions,
- Figure 4B shows a schematic diagram of a stabilization effect of counter-directional aerodynamic forces of a pitch angle change and wing heave motions,
- Figure 4C shows a schematic diagram of a stabilization effect of an illustrative active flutter reduction system for an eVTOL multirotor aircraft in accordance with some implementations, in which a lifting propeller is mounted at a rear portion of a lifting surface,
- Figure 4D shows a schematic diagram of a stabilization effect of an illustrative active flutter reduction system for an eVTOL multirotor aircraft in accordance with some implementations, in which a lifting propeller is mounted at a forward portion of a lifting surface,
- Figure 5 shows a flowchart showing illustrative operations that one or more of the active flutter reduction systems of Figures 2A to 2C may perform to reduce flutter,
- Figure 6 shows a flowchart showing illustrative operations that one or more of the active flutter reduction systems of Figures 2A to 2C may perform to reduce flutter,
- Figure 7 shows another flowchart showing illustrative operations that one or more of the active flutter reduction systems of Figures 2A to 2C may perform to reduce flutter, and
- Figure 8 shows yet another detailed flowchart showing illustrative operations that one or more of the active flutter reduction systems of Figures 2A to 2C may perform to reduce flutter.

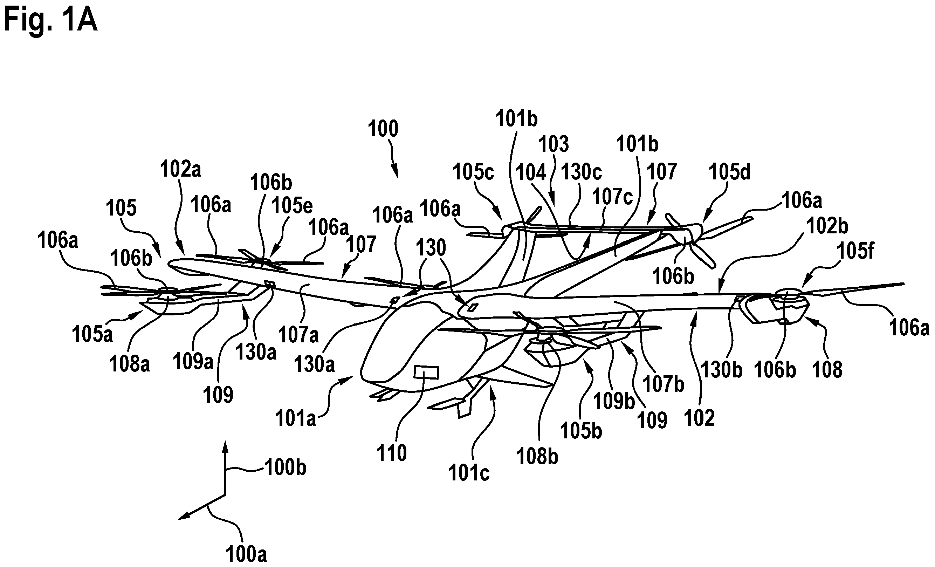

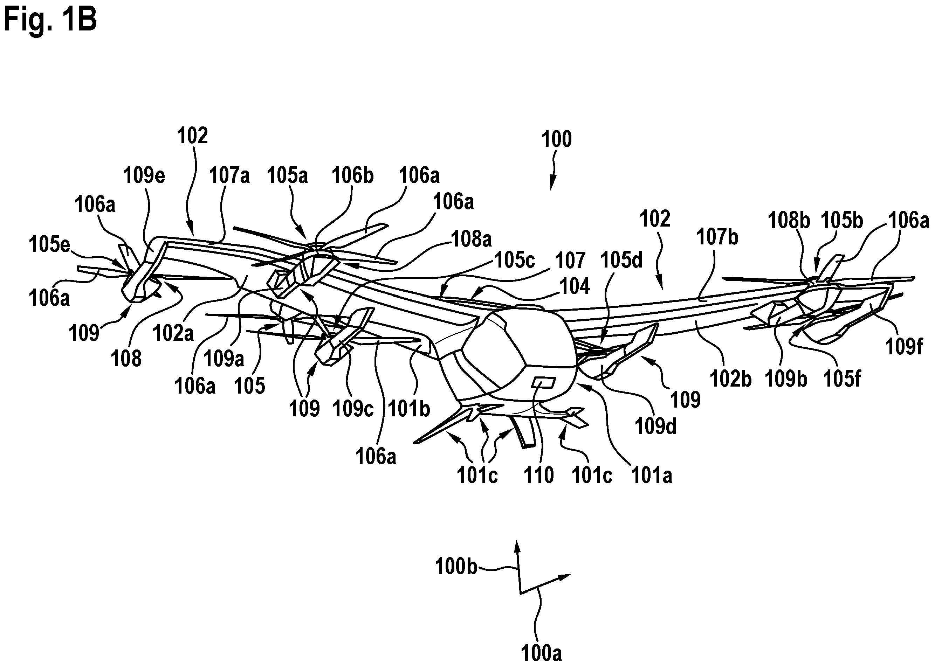

Figures 1A and 1B show, from different perspectives, an exemplary multirotor aircraft 100 that is electrically powered and adapted for vertical take-off and landing and, therefore, provided with at least one aircraft lifting surface 107 and at least one propeller 105. The electrically powered multirotor aircraft 100 that is adapted for vertical take-off and landing is hereinafter referred to as the "eVTOL multirotor aircraft 100".

According to one aspect, the eVTOL multirotor aircraft 100 is adapted for transportation of passengers and illustratively comprises a fuselage 101a that forms a cabin. The fuselage 101a may be connected to any suitable undercarriage, e. g. landing gear 101c. By way of example, the landing gear 101c may be e. g. a skid- or wheel-type landing gear. Illusively, a V-shaped tail boom 101b is connected to and, thus, extends from the fuselage 101a. Furthermore, a tail assembly 103 is provided at an aft portion of the tail boom 101b and mounted to the tail boom 101b. Alternatively, the tail boom 101b may also be formed as an I-shaped tail boom structure. The I-shaped tail boom may extend from the fuselage 101a and a tail assembly may be provided at an aft portion of the I-shaped tail boom and mounted thereto. Illustratively, the tail assembly 103 may include a horizontal stabilizer 104 provided at an aft portion of the tail boom 101b and mounted to the tail boom 101b.

The fuselage 101a preferably defines a boarding zone that is at least adapted to enable an easy and secure boarding of freight and/or passengers. The fuselage 101a defines a supporting structure that has illustratively an extension in length direction, an extension in width direction, and an extension in height direction. The length direction is along a longitudinal axis, which is illustratively indicated in Figure 1A by a forward flight direction 100a of the eVTOL multirotor aircraft 100. The height direction is along a vertical axis that is illustratively indicated in Figure 1A by a vertical take-off direction or a lifting flight direction 100b of the eVTOL multirotor aircraft 100. The width direction is along a lateral axis that is perpendicular to the forward flight direction 100a and the lifting flight direction 100b.

The eVTOL multirotor aircraft 100 may comprise two wings 102, e. g. the first wing 102a and the second wing 102b. Each one of the first wing 102a and the second wing 102b is rigidly attached to or integrated into the fuselage 101a. Furthermore, each one of the first wing 102a and the second wing 102b has a trailing edge and a leading edge.

Alternatively, the first wing 102a and the second wing 102b may be illustratively formed as two half wings that are visually integrally formed as a whole and to be attached to the fuselage 101a to form a larger lifting surface traversing the fuselage 101a. By way of example, the eVTOL multirotor aircraft 100 may comprise a forward-swept wing 102 that is illustratively formed by a portside half wing 102b and a starboard side half wing 102a. The forward-swept wing 102 and, thus, each one of the portside and starboard side half wings 102b, 102a has a trailing edge and a leading edge. More specifically, each one of the portside and starboard side half wings 102b, 102a extends from the fuselage 101a in the width direction and respectively comprises an inboard section that is connected to the fuselage 101a and an outboard section that forms a wing tip. Illustratively, the inboard sections of the portside and starboard side half wings 102b, 102a form together a central wing region. The inboard sections may have a greater wing chord than the outboard sections.

The eVTOL multirotor aircraft 100 comprises at least one aircraft lifting surface 107a and at least one propeller 105a. More specifically, the at least one aircraft lifting surface 107a is connected to the fuselage 101a and adapted for providing lift at least during cruise flight of the eVTOL multirotor aircraft 100. The at least one propeller 105a is connected to the at least one aircraft lifting surface 107a. Furthermore, the at least one propeller 105a is at least adapted for providing forward and/or lift thrust during cruise flight of the eVTOL multirotor aircraft 100. Generally, during the cruise flight the eVTOL multirotor aircraft 100 navigates primarily in the forward flight direction 100a. Furthermore, the at least one propeller 105a may provide upward thrust (e. g. lift) during take-off and landing substantially along the lifting flight direction 100b.

According to one aspect, the eVTOL multirotor aircraft 100 may comprise at least one additional propeller 105e. The at least one additional propeller 105e may be connected to the at least one aircraft lifting surface 107a. If desired, the at least one additional propeller 105e may be adapted for providing forward and/or lift thrust during cruise flight of the eVTOL multirotor aircraft 100.

Illustratively, the eVTOL multirotor aircraft 100 may comprise a plurality of aircraft lifting surfaces 107 and a plurality of propellers 105. Each aircraft lifting surface 107 may be provided with one or more propellers 105. As shown in Figure 1A, the plurality of aircraft lifting surfaces 107 may comprise a first aircraft lifting surface 107a, a second aircraft lifting surface 107b, and a third aircraft lifting surface 107c. The plurality of propellers 105 may comprise a first propeller 105a through a sixth propeller 105f.

According to one aspect, the at least one aircraft lifting surface 107 is one of the wing 102 or the horizontal stabilizer 104 of the tail assembly 103. By way of example, the at least one aircraft lifting surface 107a may be the wing 102a on the starboard side of the fuselage 101a. Alternatively or additionally, the at least one aircraft lifting surface 107b may be the wing 102b on the portside of the fuselage 101a. Alternatively or additionally, the at least one aircraft lifting surface 107c may be the horizontal stabilizer 104 that is mounted to the tail boom 101b.

According to one aspect, the eVTOL multirotor aircraft 100 may comprise the at least one aircraft lifting surface 107a and at least one additional aircraft lifting surface 107c. The at least one aircraft lifting surface 107a comprises at least one wing 102a. The at least one additional aircraft lifting surface 107c comprises at least one horizontal stabilizer 104. The at least one wing 102a is connected to the at least one propeller 105a, and the at least one horizontal stabilizer 104 is connected to at least one other propeller 105c.

Figure 1A shows with greater visibility the layout of the aircraft lifting surfaces 107a, 107b, 107c and the propellers 105a, 105b, 105c, 105d, 105e, 105f mounted thereon, and Figure 1B shows with greater visibility mounting structures of the first aircraft lifting surface 107a and the second aircraft lifting surface 107b and the propellers 105a, 105b, 105e, 105f mounted thereon.

By way of example, the first aircraft lifting surface 107a is provided with the first propeller 105a, the second aircraft lifting surface 107b is provided with a second propeller 105b, and the third aircraft lifting surface 107c is provided with a third propeller 105c and a fourth propeller 105d. If desired, the first aircraft lifting surface 107a may further comprise a fifth propeller 105e and the second aircraft lifting surface 107b may further comprise a sixth propeller 105f. Illustratively, each of the first and second aircraft lifting surfaces 107a, 107b may be provided with three propellers 105 for providing more forward and/or lift thrust during cruise flight of the eVTOL multirotor aircraft 100.

In some implementations, the eVTOL multirotor aircraft 100 may comprise at least one beam 109a. The at least one beam 109a may be attached to the at least one aircraft lifting surface 107a. Preferably, the at least one propeller 105a is attached to the at least one aircraft lifting surface 107a via the at least one beam 109a.

Illustratively, the eVTOL multirotor aircraft 100 may comprise a plurality of beams 109. The first and second aircraft lifting surfaces 107a, 107b may be both provided with one or more beams 109. More specifically, three of the plurality of beams 109a, 109c, 109e are provided for connecting the propellers 105a, 105c, 105e to the first aircraft lifting surface 107a, whereas another three of the plurality of beams 109b, 109d, 109f are provided for the second aircraft lifting surface 107b for connecting the propellers 105b, 105d, 105f to the second aircraft lifting surface 107b.

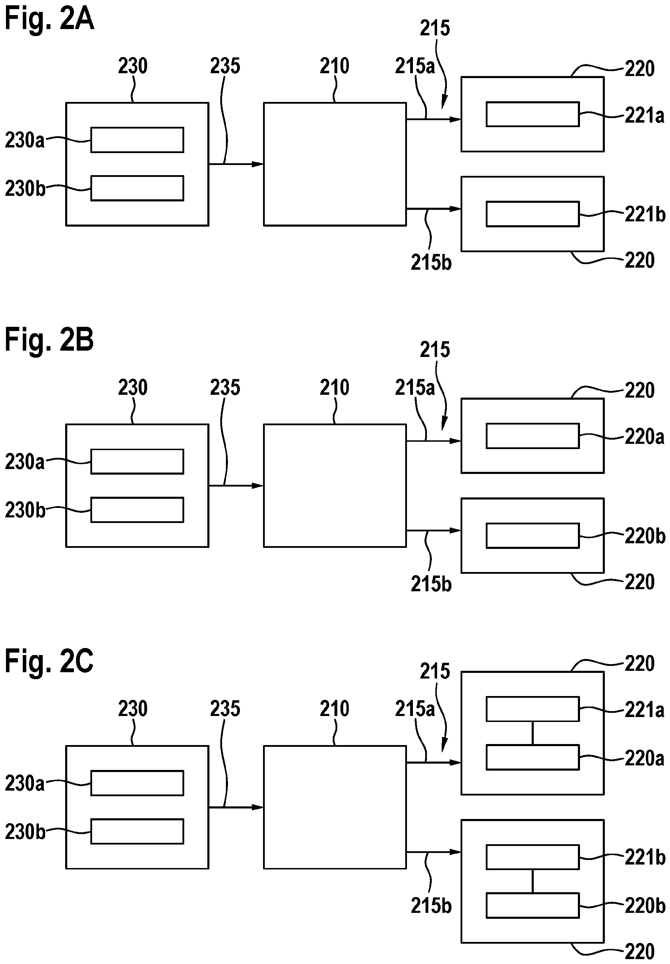

The eVTOL multirotor aircraft 100 further comprises a sensor unit 130, a flutter reduction unit (210 in Figure 2A), and a settings adjustment device (220 in Figure 2A) to reduce flutter of the at least one aircraft lifting surface 107a.

The sensor unit 130 is configured to generate sensor data (235 in Figure 2A) that is indicative of flutter of the at least one aircraft lifting surface 107a. For example, the sensor unit 130 may comprise at least one sensor 130a that is mounted to the at least one aircraft lifting surface 107a.

Preferably, the at least one sensor 130a is configured to measure operating parameters of the at least one aircraft lifting surface 107a. In some implementations, the operating parameters include at least one of a current velocity, acceleration, or strain of the at least one aircraft lifting surface 107a.

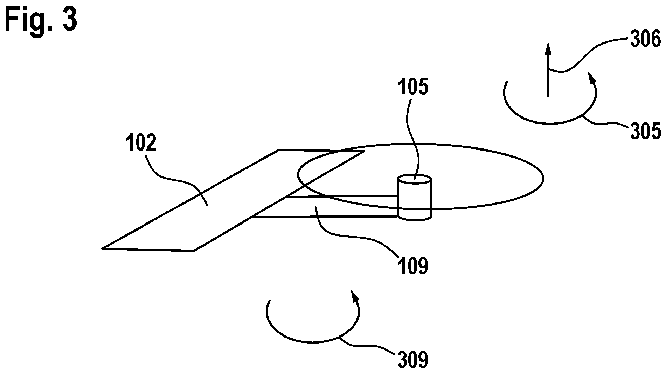

By way of example, the sensor unit 130 is used for measuring the flutter motion (309 in Figure 3) of the at least one aircraft lifting surface 107a. For this purpose, vibration sensors e.g., applied at the corners of the at least one aircraft lifting surface 107a can be used for measuring amplitudes, phases, and frequencies. An alternative or complimentary approach may include the usage of strain gauges applied to highly loaded structures of the at least one aircraft lifting surface 107a e.g., at the wing roots. If desired, optical measurements may be used instead or in addition for monitoring the at least one aircraft lifting surface 107a e.g., at the wing tips.

Illustratively, the sensor unit 130 comprises a plurality of sensors 130a, 130b, 130c mounted to the first, second, and third aircraft lifting surfaces 107a, 107b, 107c, respectively.

For simplicity and clarity of the description, the first and third aircraft lifting surfaces 107a, 107c, the first, third, fourth, and fifth propellers 105a, 105c, 105d, 105e mounted thereto, sensors 130a 130c, and beams 109a, 109e are described in more detail hereinafter representative for the plurality of aircraft lifting surfaces 107, the plurality of propellers 105, the plurality of sensors 130, and the plurality of beams 109.

More specifically, the first, third, fourth, and fifth propellers 105a, 105c, 105d, 105e may be thrust producing units of the eVTOL multirotor aircraft 100. By way of example, the first propeller may comprise associated propeller blades 106a which are rotatably mounted to an associated rotating hub 106b. The propeller blades 106a of each propeller 105a, 105c, 105d, 105e define a respective rotor disc in rotation. The respective rotor disc is inclined to the vertical axis, i.e., the lifting flight direction 100b in Figure 1A, of the eVTOL multirotor aircraft 100 such that the first, third, fourth, and fifth propellers 105a, 105c, 105d, 105e may generate lift at least during vertical take-off and landing of the eVTOL multirotor aircraft 100 as well as forward thrust during forward flight.

By way of example, the third and fourth propellers 105c, 105d may each be mounted directly to the ends of the third aircraft lifting surface 107c, i.e., the horizontal stabilizer 104, whereas the first and fifth propellers 105a, 105e may be mounted on the first aircraft lifting surface 107a via beams 109a, 109e, respectively. More specifically, the first propeller 105a may be mounted by the beam 109a on a front side of the first aircraft lifting surface 107a, and the fifth propeller 105e may be mounted by the beam 109e on a rear side of the first aircraft lifting surface 107a.

Illustratively, each one of the propellers 105 of the first aircraft lifting surface 107a may be attached to the first aircraft lifting surface 107a at a different distance from the fuselage 101a. Illustratively, the first aircraft lifting surface 107a is provided with beams 109 (e.g., beams 109a, 109c, 109e). The beams 109 may be provided on the first aircraft lifting surface 107a at different locations and/or distances from the fuselage 101a. For example, beam 109e may be provided at the end of the first aircraft lifting surface 107a that is at a farthest distance from the fuselage 101a, beam 109c may be provided on the first aircraft lifting surface 107a closer to the fuselage 101a than beam 109e, and beam 109a may be provided on the first aircraft lifting surface 107a between beams 109e and 109c.

The beams 109 may be provided in lifting flight direction 100b relative to the first aircraft lifting surface 107a substantially at the same level as (i.e., at substantially the same level in lifting flight direction 100b as the first aircraft lifting surface 107a), below (i.e., in negative lifting flight direction 100b relative to the first aircraft lifting surface 107a), or above (i.e., in positive lifting flight direction 100b relative to the first aircraft lifting surface 107a) the first aircraft lifting surface 107a. For example, and as shown in Figure 1A and Figure 1B, beam 109e may be provided in lifting flight direction 100b substantially at the same level as the first aircraft lifting surface 107a, while beams 109a and 109c are provided in lifting flight direction 100b below the first aircraft lifting surface 107a. However, if desired, any number of beams may be provided in lifting flight direction 100b at the same level as, below, or above the first aircraft lifting surface 107a. For example, zero, one, two, three, four, or more beams may be provided in lifting flight direction 100b substantially at the same level as the first aircraft lifting surface 107a, while zero, one, two, three, four or more beams are provided in lifting flight direction 100b below the first aircraft lifting surface 107a, and zero, one, two, three, four or more beams are provided in lifting flight direction 100b above the first aircraft lifting surface 107a.

The beams 109, 109c, 109a may extend in forward or backward direction (i.e., in positive forward flight direction 100a or in negative forward flight direction 100a) relative to the first aircraft lifting surface 107a, respectively. As shown in Figure 1B, beams 109c and 109e extend in backward direction relative to the first aircraft lifting surface 107a, while beam 109a extends in forward direction relative to the first aircraft lifting surface 107a. However, if desired, any number of beams may extend in forward direction or backward direction relative to the first aircraft lifting surface 107a. For example, zero, one, two, three, four or more beams may extend in forward direction relative to the first aircraft lifting surface 107a, while zero, one, two, three, four or more beams extend in backward direction relative to the first aircraft lifting surface 107a.

Illustratively, and as shown in Figure 1A and Figure 1B, each individual propeller 105 of propellers 105e, 105c, 105a may be mounted to one of the beams 109e, 109c, 109a, respectively. If desired, a beam of beams 109 may receive more than one propeller.

In some implementations, each of the propellers 105e, 105c, 105a is mounted vertically offset relative to the first aircraft lifting surface 107a. For example, the propellers 105e, 105c, 105a may be mounted in lifting flight direction 100b above or below the first aircraft lifting surface 107a. In some implementations, at least one propeller of propellers 105e, 105c, 105a may be mounted in lifting flight direction 100b above the first aircraft lifting surface 107a. In other implementations, at least one propeller of propellers 105e, 105c, 105a may be mounted in lifting flight direction 100b below the first aircraft lifting surface 107a. If desired, in either one of the two implementations described above, at least one propeller of propellers 105e, 105c, 105a may be mounted in lifting flight direction 100b at the same level as (i.e., not vertically offset relative to) the first aircraft lifting surface 107a.

According to one aspect, at least one electrical drive unit 108a for driving the at least one propeller 105a is provided for providing power to the at least one propeller 105a. More specifically, the electrical drive unit 108a may control a rotational speed of the at least one propeller 105a.

Illustratively, each of the propellers 105 is provided with an associated electrical drive unit 108. If desired, the number of electrical drive units 108 may be equal to the number of propellers 105. By way of example, the electrical drive units 108 may comprise a first electrical drive unit 108a for driving the first propeller 105a mounted to the first aircraft lifting surface 107a and a second electrical drive unit 108b for driving the second propeller 105b mounted to the second aircraft lifting surface 107b. According to one aspect, the associated electrical drive units 108a, 108b may be controlled by a flight control system 110 of the eVTOL multirotor aircraft 100.

By way of example, a third and a fourth electrical drive unit may be provided for driving the third and fourth propellers 105c, 105d of the third aircraft lifting surface 107c. Moreover, the third and fourth electrical drive units may be controlled by the flight control system 110 of the eVTOL multirotor aircraft 100. According to one aspect, each of the electrical drive units 108 may be controlled individually.

More specifically, the flight control system 110 may receive sensor data collected by the sensor unit 130 and control the at least one electrical drive unit 108a based on the sensor data. The control process will be described in more detail with reference to Figures 2A to 2C.

Figure 2A shows an illustrative active flutter reduction system that includes sensor unit 230, flutter reduction unit 210, and settings adjustment device 220.

Illustratively, the sensor unit 230 is configured to generate sensor data 235 that is indicative of flutter of at least one aircraft lifting surface (e.g., the at least one aircraft lifting surface 107a of Figure 1A or Figure 1B). The flutter reduction unit 210 is configured to receive the sensor data 235 from the sensor unit 230 and to generate, based on the sensor data 235, flutter reduction signals 215. The settings adjustment device 220 is configured to receive the flutter reduction signals 215 and to adjust current settings of at least one propeller (e.g., the at least one propeller 105a of Figure 1A or Figure 1B) based on the flutter reduction signals 215 to reduce flutter of the at least one aircraft lifting surface.

In some implementations, the current settings of the at least one propeller may be adjusted to control thrust generation of the at least one propeller for flutter reduction.

By way of example, the settings adjustment device 220 may comprise at least one electrical drive unit 221a for driving the at least one propeller. The electrical drive unit 221a may adjust the current settings of the at least one propeller to control the rotational speed of the at least one propeller for flutter reduction. The rotational speed of the at least one propeller is illustratively shown in Figure 3 as propeller speed 305.

According to one aspect, the sensor unit 230 may comprise at least one sensor 230a mounted to the at least one aircraft lifting surface and at least another sensor 230b mounted to at least another aircraft lifting surface (e.g., aircraft lifting surface 107b of Figure 1A or Figure 1B). Each sensor 230a, 230b may independently sense flutter motion 309 on the aircraft lifting surface associated therewith. The sensed data 235 then may be generated based on the flutter motion, which is illustratively shown in Figure 3 as flutter motion 309. The flutter motion may be collected by each sensor 230a, 230b and may be sent to the flutter reduction unit 210 by the sensor unit 230.

By way of example and for purposes of illustration, a flight control system (e.g., flight control system 110 of Figure 1A or Figure 1B) may comprise a computing device for processing the sensor data 235 that serves as the flutter reduction unit 210. If desired, the flutter reduction unit 210 may receive the sensor data 235 from the sensor unit 230 and generate, based on the sensor data 235, flutter reduction signals 215.

In some implementations, the flutter reduction signals 215 may comprise a first flutter reduction signal 215a and a second flutter reduction signal 215b. By way of example, the first flutter reduction signal 215a may be sent to one settings adjustment device 220 to adjust the settings of the first propeller, whereas the second flutter reduction signal 215b may be sent to another settings adjustment device 220 to adjust the settings of a second propeller.

For this purpose, an additional settings adjustment device 220 may be provided. The additional settings adjustment device 220 may be configured to receive the flutter reduction signal 215b and to adjust current settings of the at least one additional propeller based on the flutter reduction signal 215b to reduce flutter of the at least one aircraft lifting surface.

By way of example and for purposes of illustration, a plurality of settings adjustment devices 220 may be provided such that each of the propellers (e.g., propellers 105 of Figure 1A or Figure 1B) is provided with an associated settings adjustment device 220. If desired, the number of settings adjustment devices 220 may be equal to the number of propellers, and each one of the propellers may be associated with a settings adjustment device 220. Illustratively, each settings adjustment device 220 of the plurality of settings adjustment devices 220 may comprise an associated electrical drive unit 221a, 221b to individually adjust the current settings of the associated propeller. Thereby, the associated electrical drive unit 221a, 221b may individually control the rotational speed of the respective propeller for flutter reduction.

Figure 2B shows the sensor unit 230, the flutter reduction unit 210, and the settings adjustment device 220 of an eVTOL multirotor aircraft such as eVTOL multirotor aircraft 100 of Figure 1A or Figure 1B preforming a flutter reduction process different from that of Figure 2A.

According to one aspect, the settings adjustment device 220 may comprise at least one actuator unit 220a associated with at least one propeller (e.g., propeller 105a of Figure 1A or Figure 1B). The at least one actuator unit 220a may adjust the current settings of the at least one propeller to control a collective blade pitch of the at least one propeller for flutter reduction.

By way of example, one or more of the plurality of propellers of the eVTOL multirotor aircraft may be variable-pitch propellers and each one of the variable-pitch propellers is provided with an associated actuator unit 220a, 220b for controlling the collective blade pitch thereof.

In some implementations, the multirotor aircraft may include two settings adjustment devices 220, a first settings adjustment device 220 with a first actuator unit 220a for adjusting the settings of a first propeller and a second adjustment device 220 with a second actuator unit 220b for adjusting the settings of a second propeller. Upon receiving the first flutter reduction signal 215a, the first actuator unit 220a may control the collective blade pitch of the first propeller for flutter reduction, whereas upon receiving the second flutter reduction signal, the second actuator unit 220b may control the collective blade pitch of the second propeller for flutter reduction.

Figure 2C shows the sensor unit 230, the flutter reduction unit 210, and the settings adjustment device 220 of the eVTOL multirotor aircraft (e.g., eVTOL multirotor aircraft 100 of Figure 1A or Figure 1B) performing a control process that is a variant of the flutter reduction process of Figure 2B.

According to one aspect, each settings adjustment device 220 may comprise one electrical drive unit 221a and one actuator unit 220a. By way of example, the first flutter reduction signal 215a may comprise instructions for adjusting the current settings of the first propeller to control both the rotational speed of the first propeller and the collective blade pitch of the first propeller for flutter reduction. After receiving the first flutter reduction signal 215a, the electrical drive unit 221a may control the rotational speed of the first propeller and the actuator unit 220a may control the collective blade pitch of the first propeller. Both adjustments to the first propeller together result in flutter reduction of the first aircraft lifting surface that the first propeller is connected to.

According to one aspect, the respective actuator unit 220a, 220b may be separate from the respective electrical drive unit 221a, 221b. Alternatively, the respective actuator unit 220a, 220b may be integrated into the respective electrical drive unit 221a, 221b.

It is understood that any two propellers being independently controlled may be two propellers that are disposed on the same aircraft lifting surface 107a (e.g., propellers 105a and 105e of Figure 1A or Figure 1B), or two propellers that are disposed on two different aircraft lifting surfaces (e.g., as shown in Figure 1A or Figure 1B, propeller 105a on the first aircraft lifting surface 107a and propeller 105c disposed on the second aircraft lifting surface 107c.

Figure 3 shows a partial perspective view of an illustrative lifting propeller 105 and an aircraft lifting surface, illustratively shown as wing 102. As shown in Figure 3, the propeller 105 is connected to the wing 102 via the beam 109. The upward arrow 306 represents the thrust generation 306 of the lifting propeller 105. The arc arrow 305 represents the propeller speed 305, and the arc arrow 309 represents flutter motion 309 of the wing 102. Figure 3 schematically illustrates that the current settings control propeller speed 305 of the lifting propeller 105, which is adjusted to control thrust generation 306 of the lifting propeller 105 for flutter reduction.

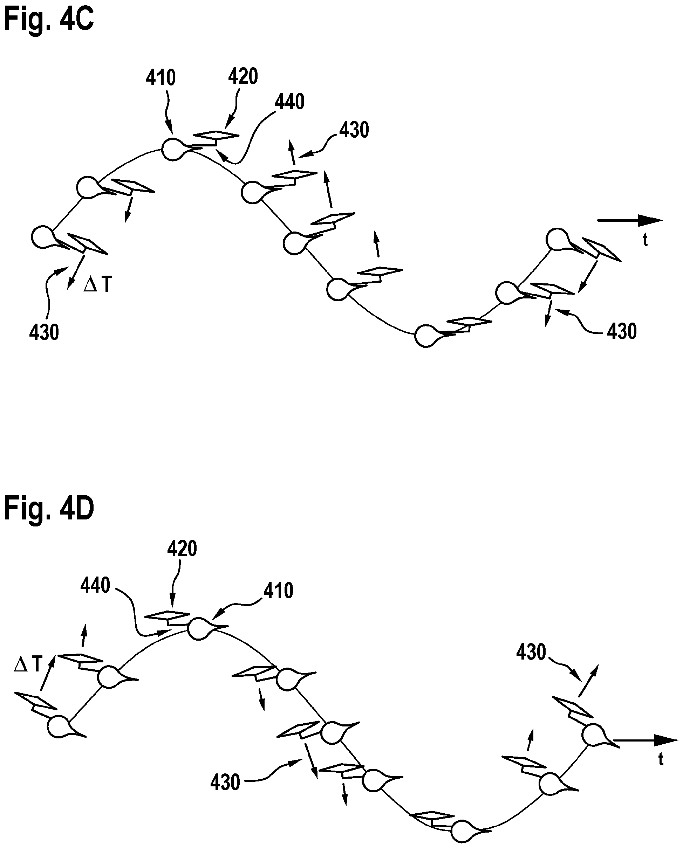

Thus, a variation of the current leads to a variation of propeller speed 305, which in turn leads to a variation (430 in Figure 4C and 4D) of the thrust generation 306 of the lifting propeller 105. The variation of the thrust generation 306 can be used for altering bending and torsion loads of wing 102 by introducing torsion moment increments. As a result, motions induced by the lifting propeller 105 to the wing 102 through a variation in thrust generation 306 may be used to reduce the flutter motion 309 of the wing 102.

According to one aspect, the thrust generation 306 of the lifting propeller 105 may be controlled by adjusting at least one of a propeller speed 305 or a collective blade pitch of the lifting propeller 105. Thus, in an eVTOL multirotor aircraft that features fixed pitch propellers, variations of propeller speed 305 may be used to adjust the thrust generation 306 of the corresponding lifting propeller 105, while in an eVTOL multirotor aircraft that features variable pitch propellers, both variations of propeller speed 305 and variation of collective blade pitch can be used to adjust the thrust generation 306 of the corresponding lifting propeller 105.

Classical aircraft flutter phenomena are typically described as unfavorable coupling of bending modes and torsion modes of structures with aerodynamic surfaces. Such structures can be e. g. wings 102 and tail planes (e. g. horizontal stabilizer 104 of Figure 1A). During the bending modes and torsion modes, the bending and torsional motions of the wing 102 or the horizontal stabilizer 104 may be oscillatory. In case of uncoupled bending and torsional motions of aerodynamic surfaces, no flutter phenomena typically appear due to inherent aerodynamic damping.

However, in the case of coupled motions - depending on the phase of the bending and torsional motions - when the structural motion is in phase with the aerodynamic loads, energy can be extracted from the airflow, resulting in an increase in the motion amplitude. This case represents unstable aeroelastic properties, i.e., the flutter situation, in which the structural damping is not sufficient to limit the amplitude. On the other hand, when the structural motion and the aerodynamic loads are anti-phase, the energy is dissipated, and represents stabilized aeroelastic characteristics.

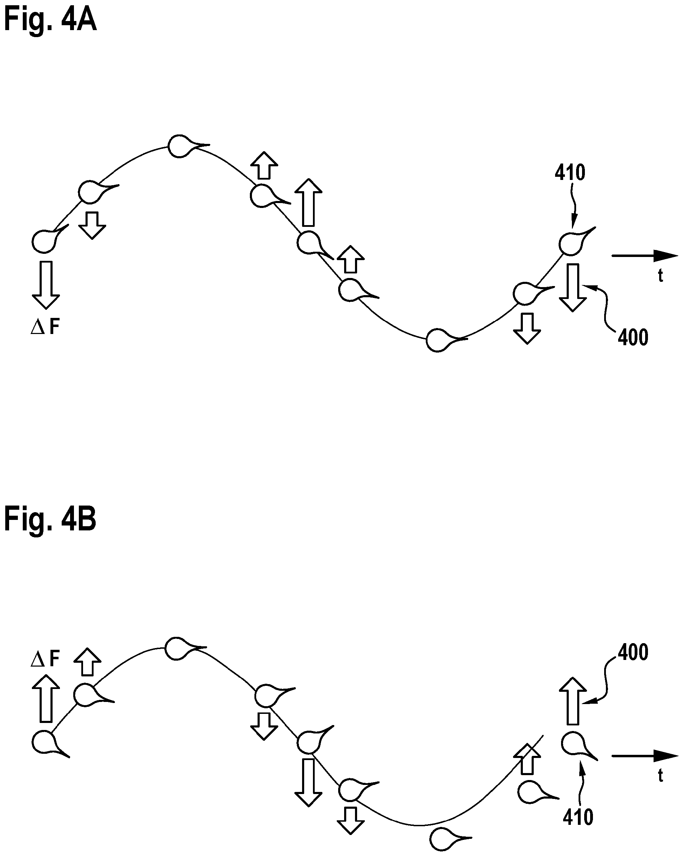

Figure 4A shows a destabilizing effect of same-directional aerodynamic forces of a pitch angle change and wing heave motions of wing 410 over time. The pitch motion of the wing 410 introduces a change of the angle of attack and leads to incremental upward or downward forces 400. The pitch motion and the heave motion shown in Figure 4A are in phase, whereby the pitch motion has its maximum for zero wing heave and is directed towards the wing heave motion. Thus, negative pitch motions coincide with moves towards negative wing heave motions, and positive pitch motions coincide with moves towards positive wing heave motions. For such a coupled same-directional motion pattern, the additional upward or downward forces 400 accelerate the wing 410 in heave direction leading to an increased motion amplitude and to flutter degradation and flutter instability.

Figure 4B shows a desired stabilizing effect of counter-directional aerodynamic forces of a pitch angle change and wing heave motions of wing 410 over time. The pitch motion of the wing 410 introduces a change of the angle of attack and leads to incremental upward or downward forces 400. The pitch motion and the heave motion shown in Figure 4B move in opposite directions, whereby the pitch motion has its maximum for zero heave and is directed opposite the wing heave motion. Thus, positive pitch motions coincide with negative wing heave motions, and negative pitch motions coincide with positive wing heave motions. Such a coupled counter-directional motion pattern dampens the wing heave motion leading to a decreased motion amplitude and to more flutter stability.

Thus, the diagram of Figure 4B illustrates desired force variations 400 that an active flutter reduction system of an eVTOL multirotor aircraft such as the eVTOL multirotor aircraft 100 of Figure 1A or Figure 1B, generates with pitch motions of the wing 410. Such desired force variations 400 may be applied to the wing 410 in its current state at that moment in time in order to achieve the stabilizing effect by dissipating the energy into the airflow. Thus, the active flutter reduction system of the eVTOL multirotor aircraft is adapted to keep modifying the phase between bending and torsion motions towards those presented in Figure 4B. By way of example, the desired force variation 400 is illustratively applied at a forward portion of the wing 410 (e.g., as illustratively shown in Figure 4D), The amplitude and rate of the desired force variation 400 may be achieved by a variation of the thrust of a propeller that is attached at the forward portion of the wing 410. Thereby, the required thrust variation depends on the motion pattern of the wing 410. It is understood that those skilled in the art would be able to determine the value of force variations 400 to be applied based on the actual movement of the wing 410.

Figure 4C and 4D each shows a stabilization effect of an active flutter reduction system of an eVTOL multirotor aircraft such as the eVTOL multirotor aircraft 100 of Figure 1A or Figure 1B, whereby in Figure 4C, the lifting propeller 420 is mounted at a rear portion of the wing 410 (e.g., propeller 105e of Figure 1A or Figure 1B is mounted at the rear portion of aircraft lifting surface 107a via beam 109e), whereas in Figure 4D, the lifting propeller 420 is mounted at a forward portion of the wing 410 (e.g., propeller 105a of Figure 1A or Figure 1B is mounted at the forward portion of aircraft lifting surface 107a via beam 109a).

Illustratively, lifting propellers 420 attached via beams 440 to the aeroelastic structure (e.g., wing 410) allow to modify bending and torsion motions by adequate load changes e.g., through propeller thrust changes (i.e., thrust variation 430) during the cycles shown in the Figures 4C and 4D. Depending on the mounting position of the lifting propeller 420, the direction of the thrust variation 430 is required to differ in order to provide the torsion moment increments in the appropriate direction to balance the instability in the motion of the wing 410.

The stabilization effect is obtained by controlling the pitch motion of the wing 410 as shown in Figure 4B over time. Thus, pitch-up lift 430 may be provided when the wing 400 oscillates towards negative heave motions and pitch-down lift when the wing oscillates towards positive heave motions.

Pitch-up lift for lifting propellers 420 mounted at a forward portion of the wing 410 as shown in Figure 4D involves a positive thrust increment and for lifting propellers 420 mounted at a rear portion of the wing 410 as shown in Figure 4C involves a negative thrust increment. Pitch-down lift for lifting propellers 420 mounted a forward portion of the wing 410 as shown in Figure 4D involves a negative thrust increment and for lifting propellers 420 mounted a rear portion of the wing 410 as shown in Figure 4C involves a positive thrust increment.

Preferably, thrust variations 430 can be established by controlling the thrust generation of the lifting propellers 420. By way of example, the thrust variations 430 may be adjusted using propeller speed changes or blade pitch changes or a combination of both. Amplitude and rate of required thrust variation 430 depends on the motion pattern of the structure. According to one aspect, the frequency of the structural motion may indicate the required bandwidth for propeller control. More specifically, the aeroelastic flutter phenomena of wings and horizontal stabilizers are typically related to fundamental structural modes featuring low frequencies (e.g., less than 10 Hz). It is understood that those skilled in the art would be able to determine the thrust variation 430 to be applied based on the actual movement.

According to one aspect, for stabilization purposes, thrust variations 430 is adjusted according to the motion of the aeroelastic structure. Accordingly, a feedback system is also provided to synchronize the thrust variations 430 of lifting propellers with the movement of the structure, i.e., the aircraft lifting surfaces 107.

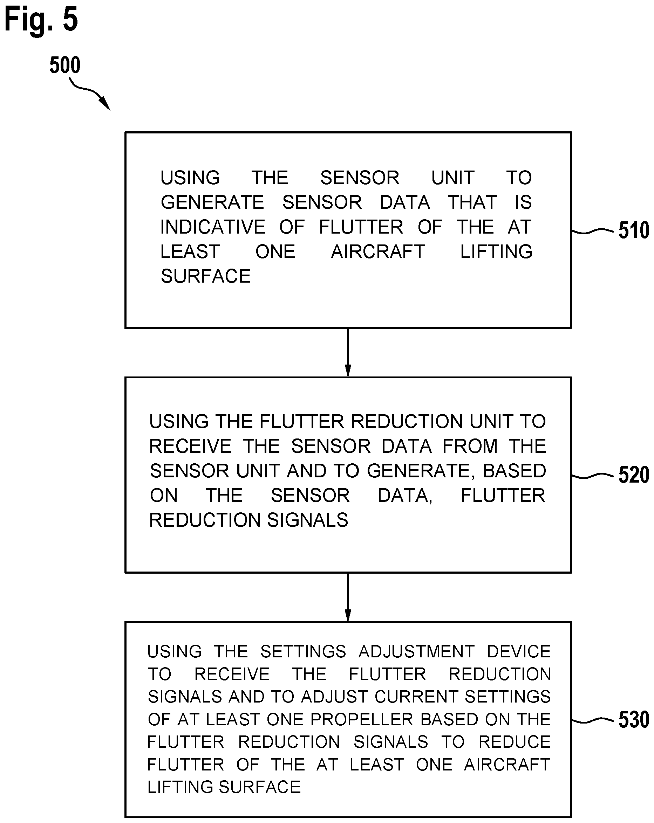

Figure 5 is a flowchart 500 showing illustrative operations that an active flutter reduction system (e.g., the active flutter reduction system of Figure 2A, 2B, or 2C) may perform to reduce flutter of at least one aircraft lifting surface of an eVTOL multirotor aircraft that comprises at least one propeller which is connected to the at least one aircraft lifting surface. Illustratively, the active flutter reduction system includes a sensor unit, a flutter reduction unit, and a settings adjustment device. By way of example, the active flutter reduction system may be controlled by the flight control system 110 of Figure 1A.

During operation 510, the active flutter reduction system may use the sensor unit to generate sensor data that is indicative of flutter of the at least one aircraft lifting surface of the eVTOL multirotor aircraft.

For example, the active flutter reduction system of Figure 2A may use sensors 230a, 230b to generate sensor data 235 based on captured motions of the first aircraft lifting surface 107a and the second aircraft lifting surface 107b of Figure 1A or Figure 1B, respectively. More specifically, the sensor 230a may generate sensor data 235 that is indicative of flutter of the first aircraft lifting surface 107a, the sensor 230b may generate sensor data 235 that is indicative of flutter of the second aircraft lifting surface 107b. Additionally, a third sensor 130c may also be used to generate sensor data 235 that is indicative of flutter of the third aircraft lifting surface 107c.

According to one aspect, operation 510 may comprise using the sensor unit 230 to measure operating parameters of the at least one aircraft lifting surface 107a. The operating parameters may comprise at least one of a current velocity, acceleration, or strain of the at least one aircraft lifting surface 107a.

During operation 520, the active flutter reduction system may use a flutter reduction unit to receive the sensor data from the sensor unit and to generate, based on the sensor data, flutter reduction signals.

For example, the active flutter reduction system of Figure 2A may use the flutter reduction unit 210 to receive the sensor data 235 from the sensors 230a, 230b and to generate, based on the sensor data 235, flutter reduction signals 215. The flutter reduction signals 215 may include the first flutter reduction signal 215a and the second flutter reduction signal 215b.

During operation 530, the active flutter reduction system may use a settings adjustment device to receive the flutter reduction signals and to adjust current settings of at least one propeller based on the flutter reduction signals to reduce flutter of the at least one aircraft lifting surface.

For example, the active flutter reduction system of Figure 2A may use the settings adjustment device 220 to receive the flutter reduction signals 215 and to adjust current settings of at least one propeller 105 of Figure 1A or Figure 1B based on the flutter reduction signals 215 to reduce flutter of the at least one aircraft lifting surface 107. As shown in Figure 2A, two settings adjustment devices 220 may be used to independently adjust current settings of two propellers 105 based on the first flutter reduction signal 215a and the second flutter reduction signal 215b to reduce flutter of one or two aircraft lifting surfaces 107, depending on whether the two propellers 105 are connected to the same or different two aircraft lift surfaces 107.

According to one aspect, the above operations 510, 520, 530 can be performed in chronological order. After operation 530, operation 510 may be performed again to initiate another cycle of stabilization monitoring and reduction of the flutter. In addition, the execution of operation 510 in the later cycle may also serve as a feedback test for the flutter reduction effect in the previous cycle.

According to one aspect, operation 530 may comprise an operation of using the settings adjustment device 220 of Figure 2A to adjust the current settings of the at least one propeller 105a of Figure 1A or Figure 1B to control thrust generation of the at least one propeller 105a for flutter reduction.

More specifically, operation 530 may comprise an operation of using the settings adjustment device 220 of Figure 2A and/or Figure 2C to adjust the rotational speed of the at least one propeller 105a of Figure 1A or Figure 1B and/or the collective blade pitch of the at least one propeller 105a.

If desired, the flight control system 110 of Figure 1A or Figure 1B may perform additional operations. For example, the flight control system 110 may control the electrical drive unit 221a, 221b and/or actuator unit 220a, 220b of Figure 2C to implement the settings adjustment device 220 before using the settings adjustment device 220 to adjust the rotational speed of the at least one propeller 105a and/or the collective blade pitch of the at least one propeller 105a.

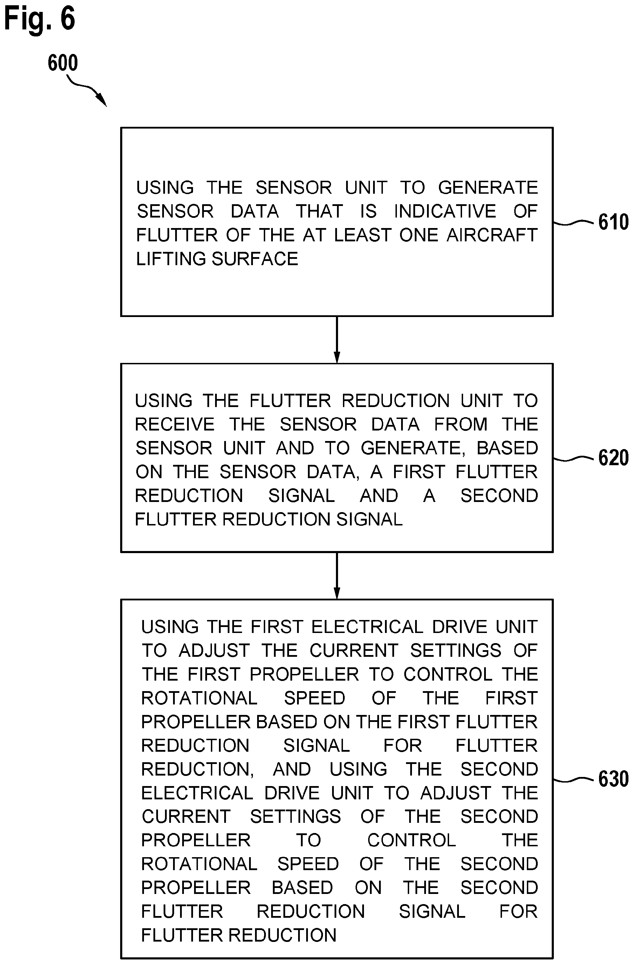

Figures 6 to 8 are flowchart diagrams 600, 700, 800 showing illustrative operations that an active flutter reduction system (e.g., active flutter reduction system of Figure 2A, 2B, or 2C) may perform for flutter reduction. The active flutter reduction system may include a sensor unit, a flutter reduction unit, and a settings adjustment device. For example, as shown in Figures 2A, 2B, or 2C the active flutter reduction system may include sensor unit 230, flutter reduction unit 210, and settings adjustment device 220.

During operation 610, 710, 810, the active flutter reduction system uses the sensor unit to generate sensor data that is indicative of flutter of at least one aircraft lifting surface of an eVTOL multirotor aircraft 100.

During operation 620, 720, 820, the active flutter reduction system may use the flutter reduction unit to receive the sensor data from the sensor unit and to generate, based on the sensor data, a first flutter reduction signal and a second flutter reduction signal.

During operation 630, the active flutter reduction system may use a first electrical drive unit (e.g., electrical drive unit 221a of Figure 2A or 2C) of the settings adjustment device (e.g., settings adjustment device 220 of Figure 2A or 2C) to adjust the current settings of a first propeller (e.g., propeller 105a of Figure 1A or 1B) to control the rotational speed of the first propeller based on the first flutter reduction signal (e.g., flutter reduction signal 215a of Figure 2A or 2C). The operation 630 may further comprise using a second electrical drive unit (e.g., electrical drive unit 221b of Figure 2A or 2C) of the settings adjustment device to adjust the current settings of a second propeller (e.g., propeller 105b of Figure 1A or 1B) to control the rotational speed of the second propeller based on the second flutter reduction signal (e.g., flutter reduction signal 215b of Figure 2A or 2C).

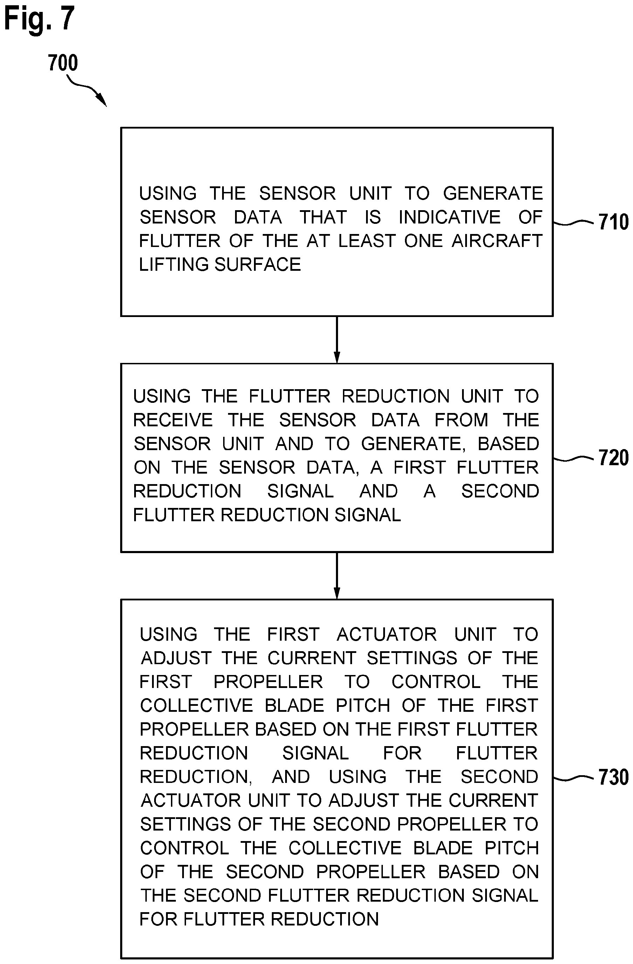

During operation 730 of Figure 7, the active flutter reduction system may use a first actuator unit (e.g., actuator unit 220a of Figure 2B or 2C) of the settings adjustment device (e.g., settings adjustment device 220 of Figure 2B or 2C) to adjust the current settings of a first propeller (e.g., propeller 105a of Figure 1A or 1B) to control the collective blade pitch of the first propeller based on the first flutter reduction signal (e.g., flutter reduction signal 215a of Figure 2B or 2C). The operation 730 may further comprise using a second actuator unit (e.g., actuator unit 220b of Figure 2B or 2C) of the settings adjustment device (e.g., settings adjustment device 220 of Figure 2B or 2C) to adjust the current settings of a second propeller (e.g., propeller 105b of Figure 1A or 1B) to control the collective blade pitch of the second propeller based on the second flutter reduction signal (e.g., flutter reduction signal 215b of Figure 2B or 2C).

It is understood that the first propeller and the second propeller being independently controlled may be disposed on the same aircraft lifting surface. Alternatively, the first and second propellers may be disposed on different aircraft lifting surfaces.

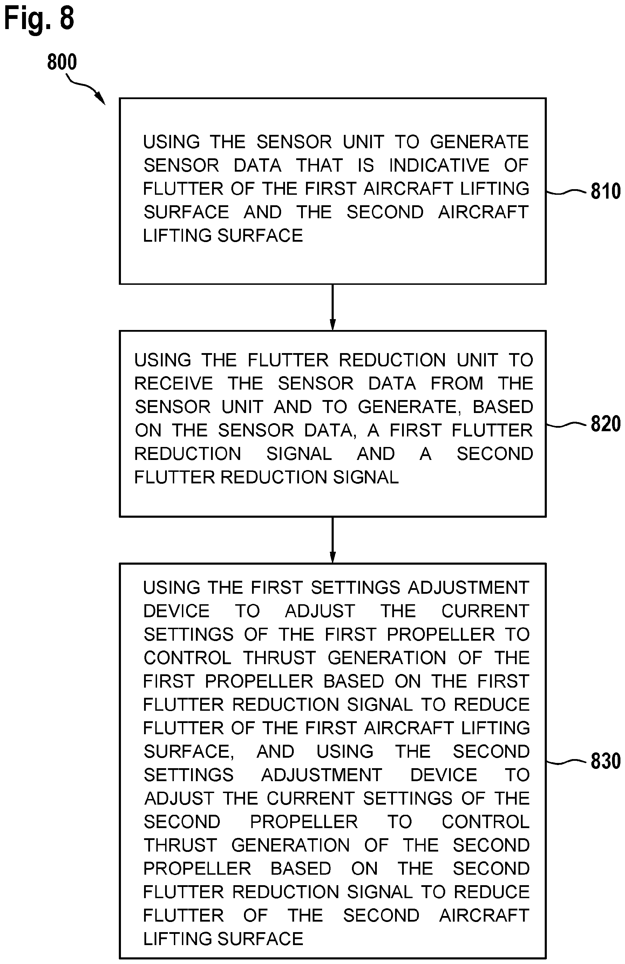

During operation 830 in Figure 8, the active flutter reduction system may use a first settings adjustment device (e.g., settings adjustment device 220 of Figure 2A or 2C) to adjust the current settings of a first propeller (e.g., propeller 105a of Figure 1A or 1B) to control thrust generation of the first propeller based on the first flutter reduction signal (e.g., flutter reduction signal 215a of Figure 2A or 2C) to reduce flutter of the first aircraft lifting surface (e.g., aircraft lifting surface 107a of Figure 1A or 1B). For example, the first settings adjustment device 220 of Figure 2A or Figure 2C may be used for adjusting the thrust generation of the first propeller 105a of Figure 1A or 1B to achieve a flutter reduction of the first aircraft lifting surface 107a. If desired, the thrust generation of the first propeller 105a may be controlled by adjusting the rotational speed or the collective blade pitch or both the rotational speed and the collective blade pitch of the first propeller 105a.

Furthermore, the operation 830 may further comprise using the second settings adjustment device (e.g., settings adjustment device 220 of Figure 2A or Figure 2C) to adjust the current settings of a second propeller (e.g., propeller 105b of Figure 1A or 1B) to control thrust generation of the second propeller based on the second flutter reduction signal (e.g., flutter reduction signal 215b of Figure 2A or 2C) to reduce flutter of the second aircraft lifting surface (e.g., aircraft lifting surface 107b or Figure 1A or 1B). For example, the second settings adjustment device 220 of Figure 2A or 2C may be used for adjusting the thrust generation of the second propeller 105b of Figure 1A or 1B to achieve a flutter reduction of the second aircraft lifting surface 107b. If desired, the thrust generation of the second propeller 105b may be controlled by adjusting the rotational speed or the collective blade pitch or both the rotational speed and the collective blade pitch of the second propeller 105b.

It should be noted that modifications to the above described embodiments are within the common knowledge of the person skilled in the art and, thus, also considered as being part of the present invention. For instance, at Figure 1A it is described that the third propeller 105c and fourth propeller 105d are directedly connected to the horizontal stabilizer 104. However, the third and fourth propeller 105c, 105d may also be connected to the horizontal stabilizer 104 via beams.

In addition, the operations illustrated in Figures 6 to 8 may also be combined. For example, for the first aircraft lifting surface 107a of Figure 1A or 1B, the current setting of only one propeller thereon may be adjusted as needed, while for the second aircraft lifting surface 107b the current settings of two propellers thereon may be adjusted as needed. As another example, the current settings of the propellers 105 on the first and second aircraft lifting surfaces 107a, 107b may be adjusted by controlling the rotational speed of the propellers 105, while the current settings of the propellers 105 on the third aircraft lifting surface 107c are adjusted by controlling the collective blade pitch of the propellers 105.

In addition, the type, position, and number of the plurality of sensors illustrated in Figures 1A and 1B may also be adjusted according to specific needs. If desired, optical measurements can also be used for monitoring the aerodynamic surfaces.

### Reference List

100 multirotor aircraft
100a forward flight direction
100b lifting flight direction
101a fuselage
101b tail boom
101c landing gear
102, 102a, 102b, 410 wing
103 tail assembly
104 horizontal stabilizer
105, 420 propeller
105a first propeller
105b second propeller
105c third propeller
105d fourth propeller
105e fifth propeller
105f sixth propeller
106a propeller blade
106b rotating hub
107 aircraft lifting surface
107a first aircraft lifting surface
107b second aircraft lifting surface
107c third aircraft lifting surface
108, 108a, 108b, 221a, 221b electrical drive unit
109, 109a, 109b, 109c, 109d, 109e, 109f beam
110 flight control system
130, 230 sensor unit
130a, 130b, 130c, 230a, 230b sensor
210 flutter reduction unit
215 flutter reduction signal
215a first flutter reduction signal
215b second flutter reduction signal
220 settings adjustment device
220a first actuator unit
220b second actuator unit
235 sensor data
305 propeller speed
306 thrust generation
309 flutter motion of lifting surface
400 force variation
410 wing
420 lifting propeller
430 thrust variation
440 beam
500, 600, 700, 800 method
510, 520, 530 operations
610, 620, 630 operations
710, 720, 730 operations
810, 820, 830 operations

## Claims

1. An electrically powered multirotor aircraft (100) that is adapted for vertical take-off and landing, comprising:
a fuselage (101a);
at least one aircraft lifting surface (107a) which is connected to the fuselage (101a) and adapted for providing lift at least during cruise flight of the electrically powered multirotor aircraft (100);
at least one propeller (105a) which is connected to the at least one aircraft lifting surface (107a) and at least adapted for providing forward and/or lift thrust during cruise flight of the electrically powered multirotor aircraft (100);
a sensor unit (130, 230) that is configured to generate sensor data (235) that is indicative of flutter of the at least one aircraft lifting surface (107a);
a flutter reduction unit (210) that is configured to receive the sensor data (235) from the sensor unit (230) and to generate, based on the sensor data (235), flutter reduction signals (215);
a settings adjustment device (220) that is configured to receive the flutter reduction signals (215) and to adjust current settings of the at least one propeller (105a) based on the flutter reduction signals (215) to reduce flutter of the at least one aircraft lifting surface (107a).

2. The electrically powered multirotor aircraft (100) of claim 1, wherein the current settings of the at least one propeller (105a) are adjusted to control thrust generation of the at least one propeller (105a) for flutter reduction.

3. The electrically powered multirotor aircraft (100) of claim 1 or 2, wherein the settings adjustment device (220) comprises at least one electrical drive unit (108a) for driving the at least one propeller (105a), and wherein the electrical drive unit (108a) adjusts the current settings of the at least one propeller (105a) to control a rotational speed of the at least one propeller (105a) for flutter reduction.

4. The electrically powered multirotor aircraft (100) of any one of the preceding claims, wherein the settings adjustment device (220) comprises at least one actuator unit (220a) associated with the at least one propeller (105a), and wherein the at least one actuator unit (220a) adjusts the current settings of the at least one propeller (105a) to control a collective blade pitch of the at least one propeller (105a) for flutter reduction.

5. The electrically powered multirotor aircraft (100) of any one of the preceding claims, wherein the sensor unit (130) comprises at least one sensor (130a) that is mounted to the at least one aircraft lifting surface (107a); and wherein the at least one sensor (130a) is configured to measure operating parameters of the at least one aircraft lifting surface (107a).

6. The electrically powered multirotor aircraft (100) of claim 5, wherein the operating parameters comprise at least one of a current velocity, acceleration, or strain of the at least one aircraft lifting surface (107a).

7. The electrically powered multirotor aircraft (100) of any one of the preceding claims, further comprising at least one additional propeller (105e) which is connected to the at least one aircraft lifting surface (107a) and at least adapted for providing forward and/or lift thrust during cruise flight of the electrically powered multirotor aircraft (100), wherein an additional settings adjustment device (220) is provided that is configured to receive the flutter reduction signals (215) and to adjust current settings of the at least one additional propeller (105e) based on the flutter reduction signals (215) to reduce flutter of the at least one aircraft lifting surface (107a).

8. The electrically powered multirotor aircraft (100) of any one of the preceding claims, further comprising:
at least one beam (109a) that is attached to the at least one aircraft lifting surface (107a), wherein the at least one propeller (105a) is attached to the at least one aircraft lifting surface (107a) via the at least one beam (109a).

9. The electrically powered multirotor aircraft (100) of any one of the preceding claims, wherein the at least one aircraft lifting surface (107) is one of a wing (102) or a horizontal stabilizer (104).

10. The electrically powered multirotor aircraft (100) of any one of claims 1 to 8, wherein the at least one aircraft lifting surface (107a) comprises at least one wing (102a); wherein at least one additional aircraft lifting surface (107c) is provided, the at least one additional aircraft lifting surface (107c) comprising at least one horizontal stabilizer (104); and wherein the at least one wing (102a) is connected to at least one propeller (105a), and wherein the at least one horizontal stabilizer (104) is connected to at least one other propeller (105c).

11. A method (500) of reducing flutter of at least one aircraft lifting surface (107) of an electrically powered multirotor aircraft (100) that is adapted for vertical take-off and landing and comprises at least one propeller (105) which is connected to the at least one aircraft lifting surface (107), comprising:
using (510) a sensor unit (230) to generate sensor data (235) that is indicative of flutter of the at least one aircraft lifting surface (107);
using (520) a flutter reduction unit (210) to receive the sensor data (235) from the sensor unit (230) and to generate, based on the sensor data (235), flutter reduction signals (215); and
using (530) a settings adjustment device (220) to receive the flutter reduction signals (215) and to adjust current settings of at least one propeller (105) based on the flutter reduction signals (215) to reduce flutter of the at least one aircraft lifting surface (107).

12. The method (500) of claim 11, wherein using (530) the settings adjustment device (220) to adjust current settings of the at least one propeller (105) based on the flutter reduction signals (215) to reduce flutter of the at least one aircraft lifting surface (107) comprises using (530) the settings adjustment device (220) to adjust the current settings of the at least one propeller (105a) to control thrust generation of the at least one propeller (105a) for flutter reduction.

13. The method (500) of claim 11 or 12, wherein using (530) the settings adjustment device (220) to adjust current settings of the at least one propeller (105) based on the flutter reduction signals (215) to reduce flutter of the at least one aircraft lifting surface (107) comprises using (530) the settings adjustment device (220) to adjust a rotational speed of the at least one propeller (105a) and/or a collective blade pitch of the at least one propeller (105a).

14. The method (500) of any one of claims 11 to 13, wherein using (510) the sensor unit (230) to generate sensor data (235) comprises using the sensor unit (130) to measure operating parameters of the at least one aircraft lifting surface (107a).

15. The method (500) of claim 14, wherein the operating parameters comprise at least one of a current velocity, acceleration, or strain of the at least one aircraft lifting surface (107a).
